(19) **Europäisches Patentamt / European Patent Office / Office européen des brevets**

(11) **EP 4 622 156 A1**

(12) **EUROPEAN PATENT APPLICATION**
published in accordance with Art. 153(4) EPC

(43) Date of publication:
24.09.2025 Bulletin 2025/39

(21) Application number: 23893703.1

(22) Date of filing: 15.11.2023

(51) International Patent Classification (IPC):
*H04L 5/00* (2006.01)

(52) Cooperative Patent Classification (CPC):
H04L 5/00; H04W 72/044; H04W 72/121;
H04W 72/541

(86) International application number:
PCT/CN2023/131890

(87) International publication number:
WO 2024/109613 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.11.2022 CN 202211478466

(71) Applicant: Huawei Technologies Co., Ltd.
Shenzhen, Guangdong 518129 (CN)

(72) Inventors:
• GUO, Chaofan
Shenzhen, Guangdong 518129 (CN)

• LI, Dan
Shenzhen, Guangdong 518129 (CN)
• HAO, Yong
Shenzhen, Guangdong 518129 (CN)
• ZHAN, Qicong
Shenzhen, Guangdong 518129 (CN)
• JIN, Xinbo
Shenzhen, Guangdong 518129 (CN)

(74) Representative: Körber, Martin Hans
Mitscherlich PartmbB
Patent- und Rechtsanwälte
Karlstraße 7
80333 München (DE)

(54) **COMMUNICATION METHOD AND APPARATUS, AND STORAGE MEDIUM**

(57) A communication method and apparatus, and a storage medium are provided, and relate to the field of communication technologies. The method may be performed by a network device. The method includes: determining a first downlink transmission parameter of a first terminal device based on a state of a downlink channel of the first terminal device, where the first downlink transmission parameter includes a first rank; determining, based on the first downlink transmission parameter, a first quantity of RBs occupied by downlink data of the first terminal device; determining a first quantity of remaining RBs based on a quantity of allocable RBs and the first quantity of RBs; and performing downlink data transmission with the first terminal device based on a second downlink transmission parameter if the first terminal device satisfies at least a first condition, where the second downlink transmission parameter includes a second rank, a quantity of spatial multiplexing streams indicated by the second rank is less than a quantity of spatial multiplexing streams indicated by the first rank, and the first condition includes: The first quantity of remaining RBs supports reduction from the first rank to the second rank for the first terminal device.

EP 4 622 156 A1

A network device determines a first downlink transmission parameter of a first terminal device based on a state of a downlink channel of the first terminal device, where the first downlink transmission parameter includes a first rank (rank) ⟍ S701

The network device determines, based on the first downlink transmission parameter, a first quantity of RBs occupied by downlink data of the first terminal device ⟍ S702

The network device determines a first quantity of remaining RBs based on a quantity of allocable RBs and the first quantity of RBs ⟍ S703

The first terminal device satisfies at least a first condition (where the first quantity of remaining RBs may support reduction from a first rank (rank) to a second rank (rank) for the first terminal device) ⟍ S704

No → The network device performs downlink data transmission with the first terminal device based on the first downlink transmission parameter ⟍ S706

Yes

The network device performs downlink data transmission with the first terminal device based on a second downlink transmission parameter, where the second downlink transmission parameter includes the second rank (rank), and a quantity of spatial multiplexing streams indicated by the second rank (rank) is less than a quantity of spatial multiplexing streams indicated by the first rank (rank) ⟍ S705

FIG. 7

**Description**

CROSS-REFERENCE TO RELATED APPLICATIONS

This application claims priority to Chinese Patent Application No. 202211478466.3, filed with the China National Intellectual Property Administration on November 23, 2022 and entitled "COMMUNICATION METHOD AND APPARATUS, AND STORAGE MEDIUM", which is incorporated herein by reference in its entirety.

TECHNICAL FIELD

This application relates to the field of wireless communication technologies, and in particular, to a communication method and apparatus, and a storage medium.

BACKGROUND

With evolution of antenna technologies used in wireless communication systems from single-input single-output (single-input single-output, SISO) to massive multiple-input multiple-output (massive MIMO, where MIMO is short for multi-input multi-output in English) and system evolution from 3G to 5th generation mobile communication technology (5th generation mobile communication technology, 5G for short) new radio (new radio, NR), a maximum quantity of spatial multiplexing streams that can be supported by a single terminal device in downlink transmission increases from 1 to 4. A quantity of spatial multiplexing streams is also referred to as a rank value. Theoretically, a higher rank indicates better throughput performance of a system. However, in a contiguous coverage area, a greater rank of a user indicates higher interference between cells to a physical downlink shared channel (physical downlink shared channel, PDSCH) and a demodulation reference signal (demodulation reference signal, DMRS) of another user.

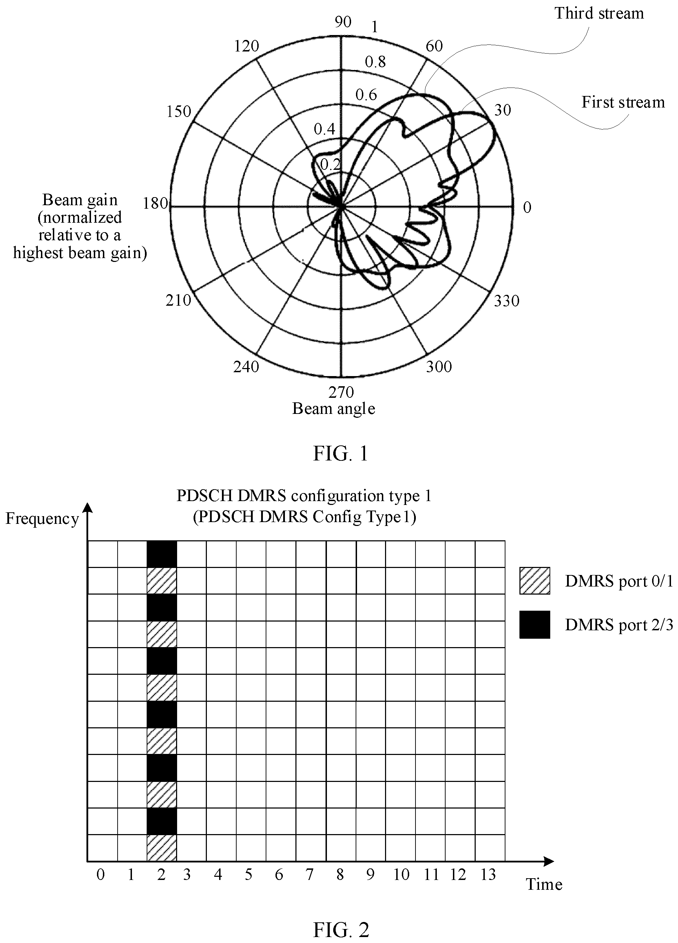

For example, FIG. 1 is a horizontal cross-sectional view of a first-stream beam and a third-stream beam of a user when Rank3 is used for downlink transmission (in other words, three streams are used for spatial multiplexing). A 0-degree direction is a direction in which an antenna faces a cell, and a larger beam deflection angle indicates a greater deviation toward a neighboring cell. An expansion angle in a horizontal direction of the third-stream beam of the user is larger than that of the first-stream beam. In other words, a direction of a horizontal direction angle of the third-stream beam is obviously deflected to the neighboring cell, causing strong interference to the neighboring cell.

Therefore, how to reduce interference to another user when user data transmission is ensured is a technical problem that needs to be resolved currently.

SUMMARY

Embodiments of this application provide a communication method and apparatus, and a storage medium, to reduce interference by reducing a rank (in other words, a quantity of spatial multiplexing streams) for a terminal device to perform downlink transmission.

According to a first aspect, a communication method is provided. The method may be applied to a network device, for example, a base station. The method includes the following steps: determining a first downlink transmission parameter of a first terminal device based on a state of a downlink channel of the first terminal device, where the first downlink transmission parameter includes a first rank; determining, based on the first downlink transmission parameter, a first quantity of resource blocks RBs occupied by downlink data of the first terminal device; determining a first quantity of remaining RBs based on a quantity of allocable RBs and the first quantity of RBs; and performing downlink data transmission with the first terminal device based on a second downlink transmission parameter if the first terminal device satisfies at least a first condition, where the second downlink transmission parameter includes a second rank, a quantity of spatial multiplexing streams indicated by the second rank is less than a quantity of spatial multiplexing streams indicated by the first rank, and the first condition includes: The first quantity of remaining RBs supports reduction from the first rank to the second rank for the first terminal device.

Optionally, that the first quantity of remaining RBs supports reduction from the first rank to the second rank for the first terminal device includes: The first quantity of remaining RBs is not less than a difference between a second quantity of RBs and the first quantity of RBs. The second quantity of RBs is a quantity, determined based on the second downlink transmission parameter, of RBs occupied by the downlink data of the first terminal device, and the second quantity of RBs is greater than the first quantity of RBs.

In the foregoing implementation, when performing downlink transmission scheduling on the first terminal device, the network device further considers RB utilization and a downlink traffic volume (that is, a data amount of the downlink data) of the first terminal device on the basis of considering a channel state. On the basis of ensuring downlink data transmission of a terminal device, an interference level and a quantity of interference sources are reduced by reducing a rank, thereby improving an interference suppression effect of demodulation of a terminal device in a neighboring cell.

In a possible implementation, the first terminal device is one of at least two terminal devices based on single-user scheduling, the at least two terminal devices further include a second terminal device, both quantities of spatial multiplexing streams determined based on states of downlink channels of the first terminal device and the second terminal device are greater than 1, the first quantity of remaining RBs of the first terminal device supports reduction from the first rank to the second rank for the first terminal device, and a second quantity of remaining RBs of the second terminal device supports reduction from a third rank to a fourth rank for the second terminal device, but the first quantity of remaining RBs does not support reduction from the third rank to the fourth rank for the second terminal device when reduction from the first rank to the second rank is performed for the first terminal device. The second quantity of remaining RBs is determined based on the quantity of allocable RBs and a quantity of RBs occupied by downlink data of the second terminal device, and the third rank is determined based on the state of the downlink channel of the second terminal device. The foregoing case indicates that a quantity of remaining RBs supports reduction for a rank of the first terminal device, and also supports reduction for a rank of the second terminal device, but does not support simultaneous reduction for the ranks of the first terminal device and the second terminal device. In this case, the performing downlink data transmission with the first terminal device based on a second downlink transmission parameter if the first terminal device satisfies at least a first condition includes: selecting the first terminal device from the first terminal device and the second terminal device, and performing downlink data transmission with the first terminal device based on the second downlink transmission parameter. In this implementation, some terminal devices may be selected for rank reduction processing in the foregoing case, to reduce interference.

In a possible implementation, the selecting the first terminal device from the first terminal device and the second terminal device includes: selecting the first terminal device from the first terminal device and the second terminal device if the first terminal device further satisfies a second condition. The second condition includes: Strength of interference of the first terminal device to a neighboring cell is greater than strength of interference of the second terminal device to a neighboring cell.

In the foregoing implementation, a terminal device that causes great interference to the neighboring cell may be preferentially selected to reduce a rank of the terminal device, so that the interference to the neighboring cell can be reduced.

In a possible implementation, the first terminal device is a terminal device in a first multi-user group in at least two multi-user groups based on multi-user scheduling, the at least two multi-user groups further include a second multi-user group, the quantity of allocable RBs is a total quantity of RBs occupied by downlink data of a terminal device in the second multi-user group, and the total quantity of RBs occupied by the downlink data of the terminal device in the second multi-user group is not less than a total quantity of RBs occupied by downlink data of a terminal device in each of the at least two multi-user groups.

In the foregoing implementation, a quantity of RBs occupied by downlink data of a terminal device in each multi-user (MU) group may be restricted, to avoid a problem that the quantity of RBs occupied by the downlink data of the terminal device increases excessively after a rank of the terminal device in the MU group is reduced.

In a possible implementation, the first multi-user group further includes a second terminal device, both quantities of spatial multiplexing streams determined based on states of downlink channels of the first terminal device and the second terminal device are greater than 1, the first quantity of remaining RBs of the first terminal device supports reduction from the first rank to the second rank for the first terminal device, and a second quantity of remaining RBs of the second terminal device supports reduction from a third rank to a fourth rank for the second terminal device, but the first quantity of remaining RBs does not support reduction from the third rank to the fourth rank for the second terminal device when reduction from the first rank to the second rank is performed for the first terminal device. The second quantity of remaining RBs of the second terminal device is determined based on the quantity of allocable RBs and a quantity of RBs occupied by downlink data of the second terminal device, and the third rank is determined based on the state of the downlink channel of the second terminal device. The foregoing case indicates that a quantity of remaining RBs in one multi-user group supports reduction for a rank of the first terminal device, and also supports reduction for a rank of the second terminal device, but does not support simultaneous reduction for the ranks of the first terminal device and the second terminal device. In this case, the performing downlink data transmission with the first terminal device based on a second downlink transmission parameter if the first terminal device satisfies at least a first condition includes: selecting the first terminal device from the first terminal device and the second terminal device, and performing downlink data transmission with the first terminal device based on the second downlink transmission parameter. In this implementation, some terminal devices may be selected for rank reduction processing in the foregoing case, to reduce interference.

In a possible implementation, the selecting the first terminal device from the first terminal device and the second terminal device includes: selecting the first terminal device from the first terminal device and the second terminal device if the first terminal device further satisfies a third condition. The third condition may be: A scheduling priority of the first terminal device is higher than a scheduling priority of the second terminal device. In this case, rank reduction processing is preferentially performed on a terminal device with a high scheduling priority. Alternatively, the third condition may be:

**EP 4 622 156 A1**

Strength of interference of the first terminal device to a neighboring cell is greater than strength of interference of the second terminal device to a neighboring cell. In this case, a terminal device with great strength of interference to the neighboring cell may be preferentially selected for rank reduction processing.

In a possible implementation, the selecting the first terminal device from the first terminal device and the second terminal device includes: determining a corresponding first transmit power reduction amount based on a first MCS of the first terminal device, and determining a corresponding second transmit power reduction amount based on a first MCS of the second terminal device; and selecting the first terminal device from the first terminal device and the second terminal device if the first transmit power reduction amount is greater than the second transmit power reduction amount. Before the performing downlink data transmission with the first terminal device based on a second downlink transmission parameter, the method further includes: reducing transmit power for the first terminal device based on the first transmit power reduction amount.

In the foregoing implementation, a terminal device with a large power reduction amount may be preferentially selected for rank reduction processing, to reduce interference, and further save energy.

In a possible implementation, before the performing downlink data transmission with the first terminal device based on a second downlink transmission parameter, the method further includes: reducing transmit power for the first terminal device, so that energy can be further saved on the basis of reducing interference.

In a possible implementation, the first downlink transmission parameter further includes a first modulation and coding scheme (MCS), the second downlink transmission parameter further includes a second MCS, and the first MCS is equal to the second MCS.

According to a second aspect, a communication apparatus is provided. The communication apparatus may be a network device (for example, a base station), or may be a communication apparatus used in the network device (for example, the base station). The communication apparatus may include a processing unit and a transceiver unit. The processing unit is configured to: determine a first downlink transmission parameter of a first terminal device based on a state of a downlink channel of the first terminal device, where the first downlink transmission parameter includes a first rank; determine, based on the first downlink transmission parameter, a first quantity of resource blocks RBs occupied by downlink data of the first terminal device; determine a first quantity of remaining RBs based on a quantity of allocable RBs and the first quantity of RBs; and perform downlink data transmission with the first terminal device by using the transceiver unit based on a second downlink transmission parameter if the first terminal device satisfies at least a first condition, where the second downlink transmission parameter includes a second rank, a quantity of spatial multiplexing streams indicated by the second rank is less than a quantity of spatial multiplexing streams indicated by the first rank, and the first condition includes: The first quantity of remaining RBs supports reduction from the first rank to the second rank for the first terminal device.

According to a third aspect, a communication apparatus is provided, and includes one or more processors. When instructions of one or more computer programs are executed by the one or more processors, the communication apparatus is enabled to perform the method according to any one of the implementations in the first aspect.

According to a fourth aspect, a computer-readable storage medium is provided. The computer-readable storage medium includes a computer program, and when the computer program is run on a computing device, the computing device is enabled to perform the method according to any one of the implementations in the first aspect.

According to a fifth aspect, a chip is provided. The chip is coupled to a memory, and is configured to read and execute program instructions stored in the memory, to implement the method according to any one of the implementations in the first aspect.

According to a sixth aspect, a computer program product is provided. When the computer program product is invoked by a computer, the computer is enabled to perform the method according to any one of the implementations in the first aspect.

For beneficial effects of the second aspect to the sixth aspect, refer to beneficial effects of the first aspect. Details are not described again.

BRIEF DESCRIPTION OF DRAWINGS

FIG. 1 is a diagram of horizontal beam directions of a first stream and a third stream of a user in a Rank3 scenario;
FIG. 2 is a diagram of resource distribution of a DMRS port 0/1 and a DMRS port 2/3;
FIG. 3 is a diagram of a simulation result of comparison between performance losses when DMRS RM is enabled and is not enabled under different rank interference;
FIG. 4 is a diagram of comparison between IRC performance when there are a plurality of interference sources;
FIG. 5 is a diagram of frequency selective fading of a group with a large traffic volume;
FIG. 6 is a diagram of a network architecture to which an embodiment of this application is applied;

5

FIG. 7 is a schematic flowchart of a communication method according to an embodiment of this application;

FIG. 8 is a diagram of reducing interference by reducing a rank of a UE in a single-user scheduling scenario according to an embodiment of this application;

FIG. 9 is a diagram of selecting, based on interference identification, a UE to reduce a rank in an SU scheduling scenario according to an embodiment of this application;

FIG. 10 is a diagram of reducing a rank in an MU scheduling scenario according to an embodiment of this application; and

FIG. 11 and FIG. 12 are respectively diagrams of communication apparatuses according to embodiments of this application.

DESCRIPTION OF EMBODIMENTS

To make objectives, technical solution, and advantages of embodiments of this application clearer, the following further describes embodiments of this application in detail with reference to accompanying drawings.

It should be understood that, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including any combination of singular items (pieces) or plural items (pieces). For example, at least one item (piece) of a, b, and c may indicate a, b, c, a and b, a and c, b and c, or a, b, and c. a, b, and c each may be in a singular form or a plural form. The terms "first", "second", and the like are intended to distinguish between similar objects, but do not necessarily describe a particular order or sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

The following first describes related technologies in embodiments of this application.

(1) Rank

The rank is a rank of a transmission channel, may be considered as a quantity of independent parallel channels between a sending device and a receiving device, and indicates a quantity of relatively independent data paths that are simultaneously supported. In an actual product, a rank value is generally considered as a quantity of spatial multiplexing streams.

In a wireless communication system, a multi-antenna transmission technology and a spatial multiplexing technology may be used to transmit a plurality of layers of data streams in parallel on a same time-frequency resource. The rank is simply understood as a same time-frequency resource, and is divided into several parts for simultaneous transmission in space. Codewords are mapped onto streams through layer mapping (where a quantity of codewords ≤ a quantity of streams ≤ a quantity of antenna ports). When the time-frequency resource remains unchanged, a higher rank indicates a higher actual throughput.

The rank may be determined based on a channel state. Generally, if a channel state is good, a rank value is high.

In this specification, Rank1 indicates that a rank value is equal to 1 (or a quantity of spatial multiplexing streams is equal to 1), Rank2 indicates that a rank value is equal to 2 (or a quantity of spatial multiplexing streams is equal to 2), and so on.

In this specification, a "first rank" may be understood as a first quantity of spatial multiplexing streams. For example, the first rank may be Rank4. A "second rank" may be understood as a second quantity of spatial multiplexing streams. For example, the second rank may be Rank2.

(2) Single-user (single-user, SU) scheduling

The SU scheduling means that one time-frequency resource can be used by only one user, or one time-frequency resource can be allocated to only one terminal device (user equipment, UE, also referred to as a user equipment).

(3) Multi-user (multi-user, MU) scheduling

The MU scheduling means that a plurality of users may share a time-frequency resource, or one time-frequency resource may be allocated to a plurality of UEs. A MIMO technology may be used for the multi-user scheduling.

In the MIMO technology, a transmit end and a receive end respectively use a plurality of transmit antennas and a plurality of receive antennas, so that signals are transmitted and received through the plurality of antennas of the transmit end and the receive end, and a plurality of channels are formed between the transmit end and the receive end, to improve communication quality and increase a channel capacity. An essence of the MIMO technology is to provide a spatial diversity gain and a spatial multiplexing gain for a system.

When the MU scheduling is used, two or more UEs may be paired. This is referred to as an MU pairing combination or MU pairing. One MU pairing combination may include a plurality of UEs, and the UEs may share one resource block (resource block, RB) resource through spatial multiplexing. In other words, in one RB resource, a plurality of UEs performs spatial multiplexing simultaneously.

Further, when the MU scheduling is used, the UEs may be grouped into different groups based on beam isolation and correlation. The different groups are referred to as MU groups. UEs in a same MU group use different frequency domain resources, and UEs in different MU groups use different space domain resources after being paired.

(4) DMRS data pilot sharing symbol (DMRS Rate Matching, DMRS RM) technology

For a scheduled UE, on a symbol used for sending a DMRS signal, the DMRS signal occupies only some resource elements (resource element, RE). In this case, an RE that is not occupied by the DMRS signal may be used to carry downlink data. In other words, the DMRS signal and the downlink data may be transmitted on one symbol. This case is referred to as DMRS RM.

(5) Modulation and coding scheme (modulation and coding scheme, MCS)

The MCS determines a modulation scheme and a code rate of a user. Different MCSs correspond to different modulation schemes and code rates. A base station uses the MCS to ensure transmission efficiency and transmission quality of a UE service. When channel quality is good, a higher-order modulation scheme and higher coding efficiency are used (where fewer protection bits are added). When channel quality is poor, a lower-order modulation scheme and lower coding efficiency are used (where more protection bits are added). An amount of data with valid bits and that can be transmitted on one RB may be determined based on the MCS. A higher MCS indicates more valid data transmitted on a single RB and a higher requirement on channel quality.

For downlink data transmission, currently, PDSCH scheduling is mainly performed in a manner of optimal single-user performance, and includes the following steps.

Step 1: Allocate DMRS pilots.

DMRSs are demodulation reference signals and need to be differentiated between different UEs and different layers (in other words, different spatial multiplexing streams) of a same UE. One DMRS port (DMRS Port) needs to be allocated to each stream. For example, when downlink transmission with a UE is performed based on Rank1, only a DMRS port 0 or a DMRS port 1 needs to be occupied. When downlink transmission with the UE is performed based on Rank2, the DMRS port 0 and the DMRS port 1 need to be occupied. When downlink transmission with the UE is performed based on Rank3, not only the DMRS port 0 and the DMRS port 1 need to be occupied, but also a DMRS port 2 or a DMRS port 3 needs to be occupied. When downlink transmission with the UE is performed based on Rank4, the DMRS port 0, the DMRS port 1, the DMRS port 2, and the DMRS port 3 need to be occupied.

Distribution of the DMRS port 0/1 and the DMRS port 2/3 is shown in FIG. 2. When the DMRS RM technology is used, if a resource corresponding to a DMRS port is not fully occupied, a DMRS signal and a PDSCH may share a symbol. For example, when downlink transmission with the UE is performed based on Rank2, the DMRS signal occupies time-frequency resources corresponding to the DMRS port 0 and the DMRS port 1. In this case, an RE of the DMRS port 2 and/or an RE of the DMRS port 3 may be used for PDSCH transmission.

Step 2: Suppress PDSCH interference of a neighboring cell.

For a UE in a primary cell, a higher rank of an interfering UE indicates more interference sources. When the UE in the primary cell uses an interference rejection combining (interference rejection combining, IRC) technology, a spatially colored characteristic of an interference signal may be used to suppress co-channel interference, to obtain an additional interference rejection gain and improve system performance.

Step 3: Perform an MU pairing combination in a cell.

A higher rank of a UE in the MU pairing combination indicates a larger total quantity of spatial multiplexing layers for pairing and greater interference between MU groups.

Currently, rank selection of the UE is mainly determined by a channel condition of the UE. If the UE is in a good channel condition, a high rank is preferred for downlink data transmission. When the high rank is used for downlink data transmission, interference also increases. This may be specifically reflected in the following several aspects.

(1) If a rank is high, interference to the neighboring cell is great. For example, when downlink data transmission is performed based on Rank3, spatial dispersion of a third-stream beam is large, and a horizontal beam direction is deflected to the neighboring cell, causing great interference to a signal on a co-frequency resource of the neighboring cell.

(2) Further, when the DMRS RM is enabled for the UE in the primary cell and the DMRS RM is not enabled for the neighboring cell, a UE in the neighboring cell performs downlink data transmission based on a high rank, causing the UE in the primary cell to estimate interference inaccurately.

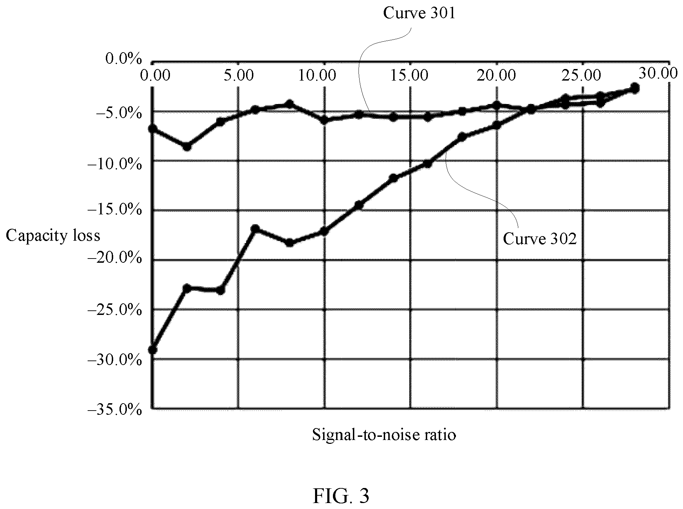

FIG. 3 is a diagram of a simulation result of comparison between performance losses when DMRS RM is enabled and is not enabled under different rank interference. Case 1 represents a scenario in which the DMRS RM is not enabled in both the primary cell and the neighboring cell. Case 2 represents a scenario in which the DMRS RM is enabled in the primary cell and is not enabled in the neighboring cell. A curve 301 is a loss of a total user capacity of a local cell in Case 2 compared with that in Case 1 when the neighboring cell uses Rank2. A curve 302 is a loss of a total user capacity of a local cell in Case 2 compared with that in Case 1 when the UE in the neighboring cell uses Rank4. It may be learned that, when the UE in the neighboring cell uses Rank4, a performance loss of a UE in the local cell when the DMRS RM is enabled is greater than a performance loss of the UE in the local cell when the DMRS RM is not enabled. The performance loss may be up to 30% (without considering a resource gain of an RE). The simulation result shows that in Case 2, when the UE in the primary cell performs downlink data transmission based on a low rank (for example, Rank1 or Rank2), the DMRS signal and the PDSCH share a symbol, and the UE in the neighboring cell performs downlink data transmission based on a high rank (for example, Rank3 or Rank4), in other words, a DMRS port of the neighboring cell is fully occupied, a total capacity loss of the primary cell is greater. In other words, if the UE in the neighboring cell performs downlink data transmission based on Rank4, the UE in the primary cell may estimate the interference to the neighboring cell inaccurately, and some transmission parameters (for example, an MCS) may not be properly selected. This affects data transmission performance of the UE in the primary cell.

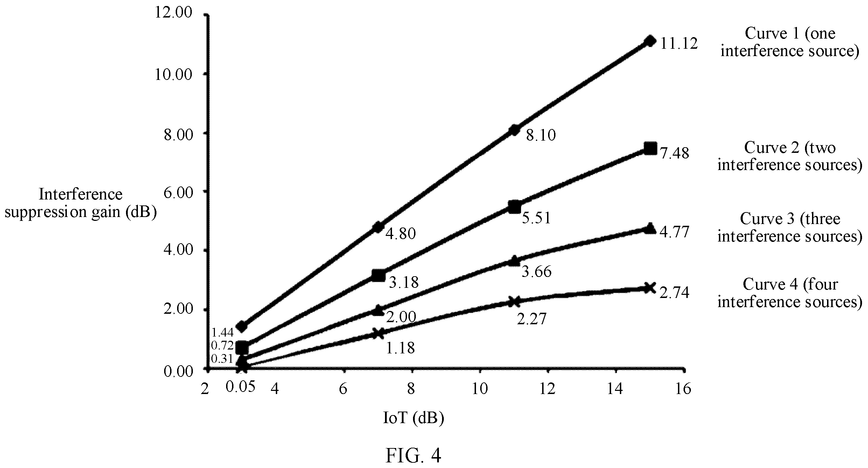

(3) Further, when an IRC technology is used, under same strength of interference, a larger quantity of interference sources causes greater impact on performance of a receiver using the IRC technology. FIG. 4 is a diagram of comparison between IRC performance when there are a plurality of interference sources. A scenario of a simulation result shown in FIG. 4 is non-line-of-sight (non-line-of-sight, NLOS) transmission. A bandwidth of a UE is 12 RBs, the UE uses four receive antennas, and an MCS in a downlink transmission parameter is equal to 16 (MCS=16). In this scenario, curves 1 to 4 respectively represent curves of changes of interference suppression gains of a UE receiver with interference over thermal (interference over thermal, IoT) under one to four interference sources. It may be learned that a larger quantity of interference sources indicates a smaller interference suppression gain obtained by the UE.

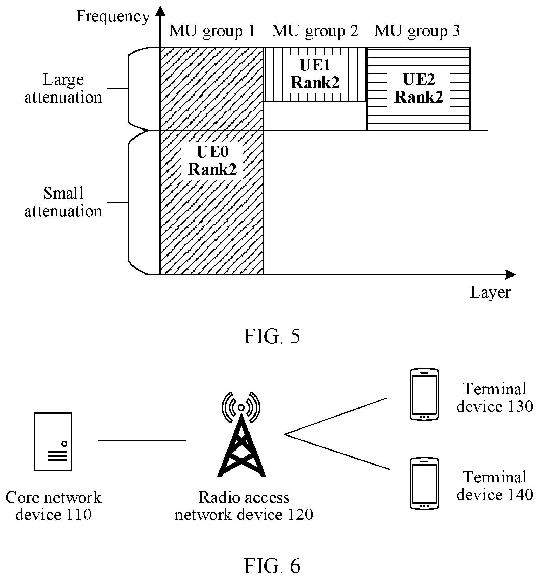

(4) Further, for MU scheduling, a higher rank of a UE in each MU group indicates greater interference between MU groups. In addition, existence of an MU group with a small traffic volume causes frequency selective fading of an MU group with a large traffic volume. As shown in FIG. 5, a UE0, a UE1, and a UE2 are respectively terminal devices in different MU groups, and the UE0, the UE1, and the UE2 are terminal devices in a same MU pairing combination. Frequency domain resources of the UE0 partially overlap frequency domain resources of the UE1 and the UE2. Therefore, the UE0, the UE1, and the UE2 perform spatial multiplexing. Existence of the interference between the MU groups causes large attenuation of the UE0 on an overlapping frequency domain resource, and small attenuation on a non-overlapping frequency domain resource, resulting in frequency selective fading of the UE0.

Therefore, embodiments of this application provide a communication method and a related apparatus that can implement the method, to reduce interference by reducing a rank (in other words, a quantity of spatial multiplexing streams) for a terminal device to perform downlink transmission.

The following describes in detail embodiments of this application with reference to the accompanying drawings.

FIG. 6 is a diagram of an architecture of a mobile communication system to which an embodiment of this application is applied. The mobile communication system includes a core network device 110, a radio access network device 120, and at least one terminal device (for example, a terminal device 130 and a terminal device 140 in the figure). The terminal device 130 is connected to the radio access network device 120 in a wireless manner, and the radio access network device 120 is connected to the core network device 110 in a wireless or wired manner. The core network device 110 and the radio access network device 120 may be independent and different physical devices, or functions of the core network device and logical functions of the radio access network device may be integrated into a same physical device, or some functions of the core network device and some functions of the radio access network device may be integrated into one physical device. The terminal device 130 may be at a fixed location, or may be movable. FIG. 6 is merely an example diagram. The communication system may further include another network device, for example, may further include a wireless relay device and a wireless backhaul device, which are not shown in FIG. 6. A quantity of core network devices, a quantity of radio access network devices, and a quantity of terminal devices included in the mobile communication system are not limited in this embodiment of this application.

The radio access network device 120 is an access device that is used by the terminal device 130 to access the mobile communication system in a wireless manner, and may be a base station NodeB, an evolved base station eNodeB, a base station in an NR mobile communication system, a base station in a future mobile communication system, an access node in a Wi-Fi system, or the like. A specific technology and a specific device form that are used by the radio access network device 120 are not limited in this embodiment of this application.

The terminal device 130 may also be referred to as a terminal terminal, a user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device 120 and the terminal device 130 may be deployed on land, including an indoor or outdoor device, a handheld device, or a vehicle-mounted device; or may be deployed on water; or may be deployed on an airplane, a balloon, and a satellite in the air. Application scenarios of the radio access network device 120 and the terminal device 130 are not limited in this embodiment of this application.

This embodiment of this application is applicable to downlink transmission. For the downlink transmission, a sending device is the radio access network device 120, and a corresponding receiving device is the terminal device 130.

The radio access network device 120 and the terminal device 130 may communicate with each other through a licensed spectrum (licensed spectrum), an unlicensed spectrum (unlicensed spectrum), or both the licensed spectrum and the unlicensed spectrum. The radio access network device 120 and the terminal device 130 may communicate with each other through a spectrum below 6G, a spectrum above 6G, or both the spectrum below 6G and the spectrum above 6G. Spectrum resources used by the radio access network device 120 and the terminal device 130 are not limited in this embodiment of this application.

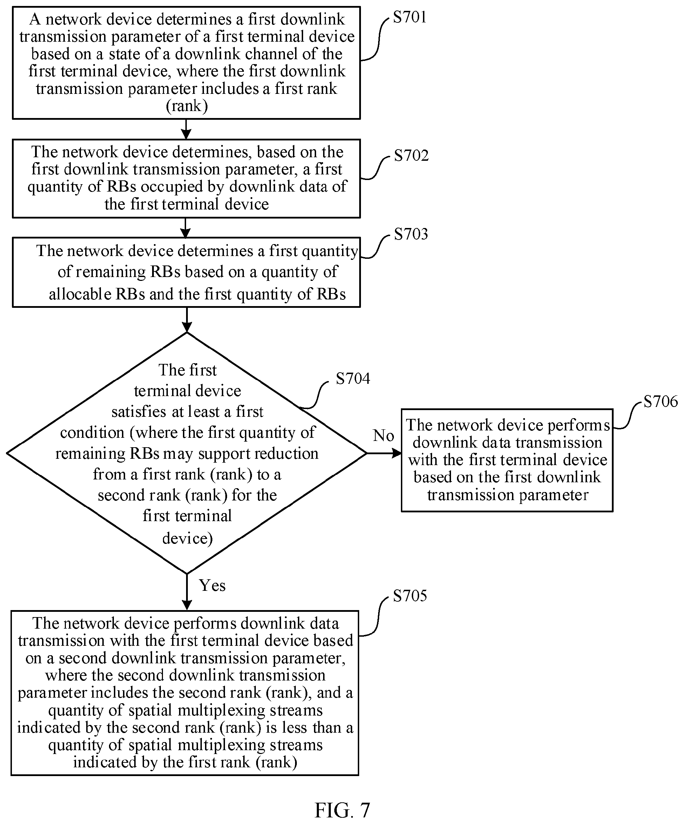

Based on the system architecture shown in FIG. 6, FIG. 7 shows a communication method implemented on a network device side according to an embodiment of this application. The network device may be a base station. In the method, the network device may reduce interference by reducing a rank for downlink transmission of a scheduled terminal device. In a procedure shown in FIG. 7, an example in which the network device schedules a first terminal device for downlink data transmission is used for description.

Refer to FIG. 7. The method may include the following steps.

S701: The network device determines a first downlink transmission parameter of the first terminal device based on a state of a downlink channel of the first terminal device, where the first downlink transmission parameter includes a first rank.

In a possible implementation, the downlink channel is a PDSCH. In addition to the first rank, the first downlink transmission parameter may further include the following parameters: an MCS, a precoding matrix indicator (precoding matrix indicator, PMI), and the like. This is not limited in this embodiment of this application.

In a possible implementation, the network device may send a reference signal to the first terminal device. The first terminal device measures the reference signal sent by the network device, may determine the state of the downlink channel based on a measurement result of the reference signal, and may report channel state information to the network device. The network device may obtain the state of the downlink channel of the first terminal device based on the channel state information reported by the first terminal device.

S702: The network device determines, based on the first downlink transmission parameter, a quantity of RBs occupied by downlink data of the first terminal device. Herein, for clarity, the quantity, determined based on the first downlink transmission parameter, of RBs occupied by the downlink data of the first terminal device is referred to as a first quantity of RBs.

In a possible implementation, the network device may estimate, based on a data amount of the downlink data to be sent to the first terminal device and the first downlink transmission parameter (for example, including parameters such as the first rank and the MCS), the quantity of RBs occupied by the downlink data, that is, the first quantity of RBs. The first quantity of RBs herein is a quantity of RBs occupied by data carried on the downlink channel of the terminal device in one slot.

The network device may determine, according to a method provided in a communication protocol or a method provided in a related technology and based on the downlink transmission parameter of the first terminal device and the data amount of the downlink data, the first quantity of RBs occupied by the downlink data of the first terminal device.

For example, the downlink channel is a PDSCH. A possible implementation of S702 includes the following steps.

Step 1: The network device determines a quantity of REs allocated to the PDSCH of the first terminal device in one slot.

First, a quantity $N_{RE}^{'}$ of REs allocated to the PDSCH in one physical resource block (physical resource block, PRB) is determined.

$$N_{RE}^{'} = N_{sc}^{RB} \cdot N_{symb}^{sh} - N_{DMRS}^{PRB} - N_{oh}^{PRB} \ \dots\dots\dots\dots\dots\dots\dots\dots\dots\dots\dots\dots\dots(1)$$

$N_{sc}^{RB}$ is a quantity of subcarriers in one PRB in frequency domain. $N_{sc}^{RB} = 12$. $N_{symb}^{sh}$ is a quantity of symbols (symbol) allocated to the PDSCH in one slot (slot). $N_{DMRS}^{PRB}$ is DMRS overheads that are of each PRB in allocated duration (duration) and that are determined based on a high layer parameter or a physical layer parameter, that is, a quantity of REs occupied by a DMRS. $N_{oh}^{PRB}$ is overheads of a parameter xOverhead in a high layer information element PDSCH serving cell configuration (IE PDSCH -ServingCellConfig). If $N_{oh}^{PRB}$ is not configured, $N_{oh}^{PRB}$ is 0.

Then, a total quantity $N_{RE}$ of REs allocated to the PDSCH is determined based on the quantity of REs in one PRB and a quantity of PRBs.

$$N_{RE} = \min\left(156, N_{RE}^{'}\right) \cdot n_{PRB} \ \dots\dots\dots\dots\dots\dots\dots\dots\dots\dots\dots\dots\dots\dots\dots(2)$$

$n_{PRB}$ is a total quantity of PRBs allocated to the PDSCH of the terminal device.

Step 2: Determine a first quantity $N_{info}$ of information bits.

$$N_{info} = N_{RE} \cdot R \cdot Q_m \cdot \upsilon \ \dots\dots\dots\dots\dots\dots\dots\dots\dots\dots\dots\dots\dots\dots(3)$$

R is a target code rate of the PDSCH. $Q_m$ is a modulation order of the PDSCH. v is a quantity of layers.

Step 3: Perform an operation such as quantization and table lookup based on $N_{info}$, to obtain a transport block size (transport block size, TBS) of data transmitted on the PDSCH of the first terminal device in one slot.

Step 4: Determine, based on the TBS and the data amount of the downlink data to be sent to the first terminal device, the quantity of RBs occupied by the downlink data carried on the downlink channel of the first terminal device in one slot.

The foregoing method for determining the quantity of RBs (that is, the first quantity of RBs) occupied by the downlink data of the first terminal device is merely an example. How to determine the quantity of RBs occupied by the downlink data of the first terminal device is not limited in this embodiment of this application.

S703: The network device determines a quantity of remaining RBs based on a quantity of allocable RBs and the first quantity of RBs. Herein, for clarity, the quantity of remaining RBs is referred to as a first quantity of remaining RBs, or referred to as a quantity of remaining RBs corresponding to the first terminal device.

Optionally, for single-user scheduling, the quantity of allocable RBs is a quantity of RBs that can be allocated to the first terminal device in RBs occupied by the downlink channel in one slot. For example, if the scheduled terminal device includes only the first terminal device, and the first rank determined based on the state of the downlink channel of the first terminal device is greater than 1, the quantity of allocable RBs is a quantity of RBs occupied by the downlink channel in one slot. For another example, if there are a plurality of scheduled terminal devices, for example, including the first terminal device and at least one another terminal device, for the first terminal device, the rank determined based on the state of the downlink channel is greater than 1, and for the another terminal device, a rank determined based on a state of a downlink channel is equal to 1, the quantity of allocable RBs is a quantity of RBs obtained by subtracting a quantity of RBs occupied by downlink data of the at least one another terminal device from a quantity of RBs occupied by downlink channels in one slot. For another example, if there are a plurality of scheduled terminal devices, for example, including the first terminal device, a second terminal device, and at least one another terminal device, for the first terminal device and the second terminal device, ranks determined based on states of downlink channels are greater than 1, and for the another terminal device, a rank determined based on a downlink channel is equal to 1, the quantity of allocable RBs is a quantity of RBs obtained by subtracting a quantity of RBs occupied by downlink data of the second terminal device and the another terminal device from a quantity of RBs occupied by downlink channels in one slot. In this step, a downlink transmission parameter based on which a quantity of RBs occupied by downlink data of a terminal device is determined is referred to as a first downlink transmission parameter, and the first downlink transmission parameter is determined based on a state of a downlink channel of the terminal device.

Optionally, for multi-user scheduling, a total quantity of RBs occupied by downlink data of a terminal device in each MU group may be determined, and then a largest value is selected as a quantity of allocable RBs of each MU group. The quantity of RBs occupied by the downlink data is determined based on the first downlink transmission parameter such as a quantity of spatial multiplexing streams obtained before rank reduction is performed on each terminal device. For each terminal device, the first downlink transmission parameter of the terminal device is determined based on a state of a downlink channel of the terminal device.

An example in which the first terminal device is a terminal device in a first MU group of at least two MU groups based on multi-user scheduling. The at least two MU groups further include a second MU group. Because a total quantity of RBs occupied by downlink data of a terminal device in the second MU group is not less than a total quantity of RBs occupied by downlink data of a terminal device in another MU group, the total quantity of RBs occupied by the downlink data of the terminal device in the second MU group is determined as the quantity of allocable RBs of each MU group. In other words, for an MU group other than the second MU group, a quantity of RBs occupied by downlink data of a terminal device in each MU group after a rank of the terminal device is reduced cannot exceed the total quantity of RBs occupied by the downlink data of the terminal device in the second MU group.

For example, an MU group 1 includes a UE0, an MU group 2 includes a UE1, and an MU group 3 includes a UE2. Based on states of downlink channels, the UE0 uses Rank1, and both the UE1 and the UE2 use Rank4. A quantity of RBs occupied by downlink data of a UE in each MU group is determined based on a rank used by each UE and a data amount of downlink data of each UE. Downlink data of the UE0 occupies a largest quantity of RBs. Therefore, the quantity of RBs occupied by the downlink data of the UE in the MU group 1 is determined as a total quantity of allocable RBs of the UE in the MU group 2 and a total quantity of allocable RBs of the UE in the MU group 3. In other words, the total quantity of allocable RBs of the UE in the MU group 2 and the total quantity of allocable RBs of the UE in the MU group 3 each are equal to the quantity of RBs occupied by the downlink data of the UE in the MU group 1.

In this embodiment of this application, the quantity of RBs occupied by the downlink data of the terminal device in each MU group is restricted in the foregoing manner, to avoid a case in which a quantity of RBs occupied by downlink data of a terminal device increases excessively after a rank of the terminal device in an MU group is reduced.

The network device may subtract the first quantity of RBs corresponding to the first terminal device from the quantity of allocable RBs, to obtain the first quantity of remaining RBs corresponding to the first terminal device.

S704: If the first terminal device satisfies at least a first condition, S705 is performed.

That the first terminal device satisfies at least the first condition may be understood as that for the first terminal device, it is at least ensured that the first quantity of remaining RBs corresponding to the first terminal device may support reduction from the first rank to a second rank for the first terminal device. A quantity of spatial multiplexing streams indicated by the second rank is less than a quantity of spatial multiplexing streams indicated by the first rank. For example, the first rank is Rank4, and the second rank is Rank2. For another example, the first rank is Rank4, and the second rank is Rank1. For another example, the first rank is Rank2, and the second rank is Rank1.

In other words, the first condition may also be expressed as: The first quantity of remaining RBs is not less than a difference between a second quantity of RBs and the first quantity of RBs. The second quantity of RBs is a quantity, determined based on a second downlink transmission parameter, of RBs occupied by the downlink data of the first terminal device. The second downlink transmission parameter includes the second rank, the quantity of spatial multiplexing streams indicated by the second rank is less than the quantity of spatial multiplexing streams indicated by the first rank, and the second quantity of RBs is greater than the first quantity of RBs.

Optionally, the first downlink transmission parameter of the first terminal device includes a first MCS, the second downlink transmission parameter of the first terminal device includes a second MCS, and the first MCS is equal to the second MCS. In other words, the network device may remain the MCS of the terminal device unchanged before and after reducing the rank of the first terminal device. Certainly, in this embodiment of this application, it is not excluded that the rank of the first terminal device may be reduced and the MCS of the first terminal device may be adjusted.

It may be understood that, after the rank is reduced, the quantity of RBs occupied by the downlink data increases. For example, when the MCS remains unchanged, the quantity of RBs occupied by the downlink data may be doubled after the rank is reduced from Rank4 to Rank2. If the first quantity of remaining RBs is not less than the difference between the second quantity of RBs and the first quantity of RBs, it indicates that after the rank is reduced, an incremental value of the quantity of RBs occupied by the downlink data is less than the first quantity of remaining RBs. In other words, the first quantity of remaining RBs may support reduction from the first rank to the second rank for the first terminal device.

In a possible implementation, the network device may first determine the second downlink transmission parameter based on the first downlink transmission parameter. For example, the network device may adjust some parameters in the first downlink transmission parameter, and remain the other transmission parameters unchanged, to obtain a new group of downlink transmission parameters, that is, the second downlink transmission parameter. For example, a rank in the first downlink transmission parameter may be reduced, to be specific, reduced from the first rank to the second rank, and another parameter (for example, the MCS) remains unchanged. In this case, the new group of downlink transmission parameters is obtained, and is referred to as the second downlink transmission parameter. A rank in the second downlink transmission parameter is the second rank, and an MCS in the second downlink transmission parameter is the same as the MCS in the first downlink transmission parameter. Then, the network device determines, based on the second downlink transmission parameter, the second quantity of RBs occupied by the downlink data of the first terminal device. For a specific implementation, refer to the foregoing descriptions. Finally, the network device may determine, based on the determined first quantity of remaining RBs, the determined first quantity of RBs, and the determined second quantity of RBs that correspond to the first terminal device, whether the first terminal device satisfies the first condition, and then determine, based on a determining result, whether to perform downlink data transmission with the first terminal device based on the first downlink transmission parameter or perform downlink data transmission with the first terminal device based on the second downlink transmission parameter.

Optionally, when reducing the rank of the first terminal device, the network device may reduce the rank of the terminal device to an appropriate value based on the data amount of the downlink data of the terminal device and the first quantity of remaining RBs, to fully use the quantity of remaining RBs and reduce the rank as much as possible. For example, when the MCS remains unchanged, it is determined, based on the state of the downlink channel of the first terminal device, that the first terminal device uses Rank4. The data amount of the downlink data to be sent by the network device to the first terminal device is small, and there is still an RB that can be allocated in a slot. If the first quantity of remaining RBs determined by the network device may support reduction from Rank4 to Rank2 for the first terminal device, or support reduction from Rank4 to Rank1 for the first terminal device, the network device may reduce the quantity of spatial multiplexing streams of the first terminal device from Rank4 to Rank1.

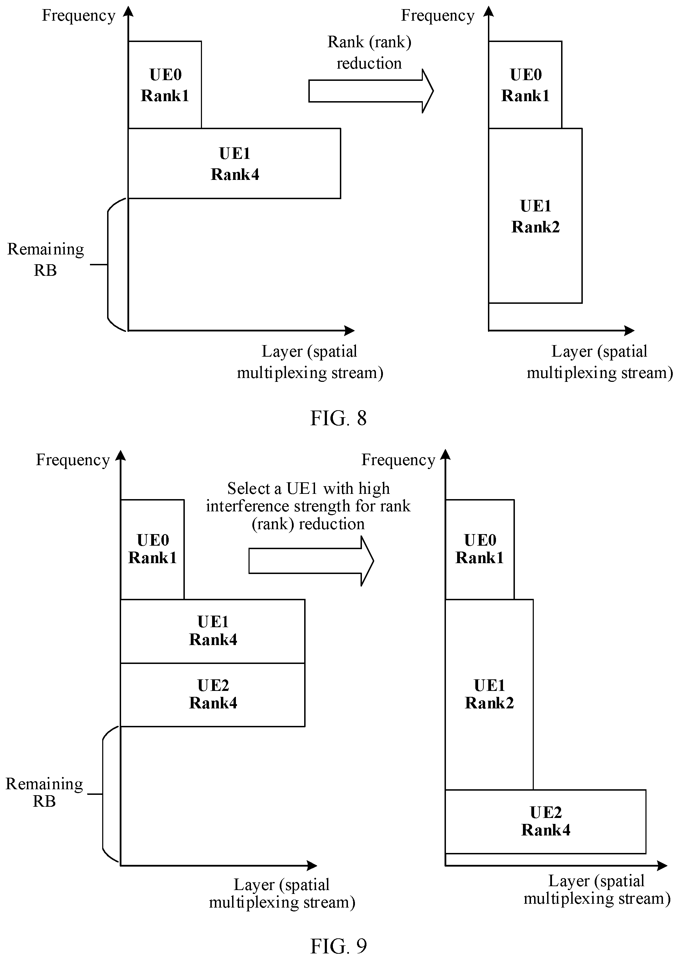

For example, FIG. 8 is a diagram of reducing interference by reducing a rank of a UE in a single-user scheduling scenario. As shown in the figure, a network device determines, based on states of PDSCHs of a UE0 and a UE1, that the UE0 uses Rank1 and the UE1 uses Rank4 currently. The network device determines, based on a data amount of downlink data of the UE1 and a downlink transmission parameter (including a quantity of spatial multiplexing streams used by the UE1) used by the UE1, a quantity of RBs occupied by the downlink data of the UE1, and may further determine a quantity of remaining allocable RBs. The network device determines that the quantity of remaining RBs may support reduction from Rank4 to Rank2 for the quantity of spatial multiplexing streams of the UE1. Therefore, the quantity of spatial multiplexing streams of the UE1 is reduced to Rank2.

S705: The network device performs downlink data transmission with the first terminal device based on the second downlink transmission parameter.

When the first terminal device satisfies the first condition, the network device may perform downlink data transmission with the first terminal device based on the second downlink data transmission parameter (including a reduced rank) of the first terminal device, so that interference can be reduced on the basis of ensuring data transmission.

Further, if the network device determines that the first terminal device does not satisfy the first condition in S704, the following step is performed.

S706: The network device performs downlink data transmission with the first terminal device based on the first downlink transmission parameter of the first terminal device.

It may be understood that the RB in the foregoing procedure may also be replaced with a physical resource block (physical resource block, PRB). There is a correspondence between the RB and the PRB, and a corresponding PRB may be obtained after the RB is mapped to a physical layer. In some scenarios, the RBs are in one-to-one correspondence with the PRBs.

In the foregoing embodiment of this application, when performing downlink transmission scheduling on the terminal device, the network device further considers RB utilization (or PRB utilization) and a downlink traffic volume of the terminal device based on a channel state. On the basis of ensuring downlink data transmission of a terminal device, an interference level and a quantity of interference sources are reduced by reducing a rank, thereby improving an interference suppression effect of demodulation of a terminal device in a neighboring cell.

In a possible implementation, based on the foregoing one or more embodiments, before performing downlink data transmission with the first terminal device based on the second downlink transmission parameter, the network device may further reduce transmit power for the first terminal device. The transmit power is reduced without affecting downlink transmission quality of the first terminal device, to save energy.

Optionally, a principle that the MCS of the terminal device remains unchanged before and after the transmit power is reduced may be used to determine a transmit power reduction amount of the terminal device (for example, the first terminal device). The MCS is determined based on the state of the downlink channel of the terminal device. In a possible implementation, an MCS 1 is used to represent the MCS determined based on the state of the downlink channel of the first terminal device. In other words, the MCS 1 is an MCS obtained before rank reduction processing is performed on the first terminal device. The network device may query, based on the MCS 1, a table of mapping from a signal to interference plus noise ratio (signal to interference plus noise ratio, SINR, or signal to interference plus noise ratio for short) to the MCS, to obtain a signal to interference plus noise ratio (where for ease of description, the signal to interference plus noise ratio is referred to an SINR 1 herein) corresponding to the MCS 1. After the network device reduces the rank of the first terminal device, the signal to interference plus noise ratio of the downlink channel of the first terminal device increases due to reduction for the quantity of spatial multiplexing streams or another reason (where for ease of description, a signal to interference plus noise ratio obtained after the rank of the first terminal device is reduced is referred to as an SINR 2 herein). The network device may determine a power reduction amount based on an incremental amount of the signal to interference plus noise ratio (that is, a difference obtained by subtracting the SINR 1 from the SINR 2). Certainly, the foregoing implementation is merely a possible example, and a method for determining the transmit power reduction amount is not limited in this embodiment of this application.

In the foregoing embodiment of this application, when the rank of the terminal device is reduced, the transmit power for the terminal device is further reduced, so that interference can be further reduced, and energy can be further saved.

Based on the procedure in FIG. 7, in a single-user scheduling scenario, the following cases may exist.

Case 1-1: If there is only one scheduled terminal device, and a quantity of spatial multiplexing streams of the terminal device is greater than 1, in other words, there is a possibility of reducing a rank, for the terminal device, the network device may determine, based on the procedure shown in FIG. 7, whether a quantity of remaining RBs can support reduction for the rank of the terminal device. If the quantity of remaining RBs supports reduction for the rank of the terminal device, the network device may determine that the terminal device satisfies the first condition, and may perform downlink data transmission with the terminal device based on a reduced rank.

Case 1-2: If there are a plurality of scheduled terminal devices, and all quantities of spatial multiplexing streams of the plurality of terminal devices are greater than 1, in other words, the plurality of terminal devices each have a possibility of reducing a rank, for each of the plurality of terminal devices, the network device determines, based on the procedure shown in FIG. 7, whether a quantity of remaining RBs of each terminal device satisfies a rank reduction condition. If the quantity of remaining RBs of each terminal device satisfies the rank reduction condition, and a quantity of RBs of a downlink channel in a slot may support simultaneous reduction for ranks of the plurality of terminal devices, the network device may separately reduce the ranks of the plurality of terminal devices, and perform downlink data transmission with the plurality of terminal devices based on reduced ranks.

Case 1-3: If there are a plurality of scheduled terminal devices, and all quantities of spatial multiplexing streams of the plurality of terminal devices are greater than 1, in other words, the plurality of terminal devices each have a possibility of reducing a rank, for each of the plurality of terminal devices, the network device determines, based on the procedure shown in FIG. 7, whether a quantity of remaining RBs of each terminal device satisfies a rank reduction condition. If the quantity of remaining RBs of each terminal device satisfies the rank reduction condition, but a quantity of RBs of a downlink channel in a slot cannot support simultaneous reduction for ranks of the plurality of terminal devices, the network device may select one or more of the terminal devices. If the quantity of RBs of the downlink channel in the slot can support simultaneous reduction for ranks of the one or more terminal devices, the network device reduces the ranks of the selected one or more terminal devices, and performs downlink data transmission with the selected one or more terminal devices based on reduced ranks.

For example, at least two terminal devices based on single-user scheduling include the first terminal device and the second terminal device. Both quantities of spatial multiplexing streams determined based on the states of the downlink channels of the first terminal device and the second terminal device are greater than 1. For the first terminal device, the network device determines, based on the procedure shown in FIG. 7, the first quantity of remaining RBs corresponding to the first terminal device. For the second terminal device, the network device determines, based on the procedure shown in FIG. 7, the second quantity of remaining RBs corresponding to the second terminal device. The second quantity of remaining RBs is determined based on the quantity of allocable RBs and the quantity of RBs occupied by the downlink data of the second terminal device.

If the first quantity of remaining RBs of the first terminal device supports reduction from the first rank to the second rank for the first terminal device, and the second quantity of remaining RBs of the second terminal device supports reduction from a third rank (where the third rank is determined based on the state of the downlink channel of the second terminal device) to a fourth rank for the second terminal device, but the first quantity of remaining RBs does not support reduction from the third rank to the fourth rank for the second terminal device when reduction from the first rank to the second rank is performed for the first terminal device (in other words, the second quantity of remaining RBs does not support reduction from the third rank to the fourth rank for the second terminal device when reduction from the first rank to the second rank is performed for the first terminal device), the network device selects one terminal device from the first terminal device and the second terminal device, for example, selects the first terminal device, and for the first terminal device, performs downlink data transmission with the first terminal device based on a second downlink transmission parameter of the terminal device.

Further, for the second terminal device, the network device performs downlink data transmission with the second terminal device by using a downlink transmission parameter (that is, a first downlink transmission parameter of the second terminal device) determined based on the state of the downlink channel of the second terminal device, and a rank of the downlink transmission parameter is not reduced.

Optionally, the selected first terminal device further satisfies a second condition, and the second condition includes: Strength of interference of the first terminal device to a neighboring cell is greater than strength of interference of the second terminal device to a neighboring cell. It may be understood that if the network device selects a plurality of terminal devices whose ranks can be reduced, strength of interference of the plurality of terminal devices to the neighboring cell is greater than strength of interference of a terminal device that is not selected for rank reduction to the neighboring cell. In other words, in this case, strength of interference of a terminal device to the neighboring cell may be determined, and a terminal device with greater strength of interference is preferentially selected for rank reduction scheduling.

Optionally, the strength of the interference of the terminal device to the neighboring cell may be determined based on a measurement report reported by the terminal device, for example, may be determined based on an A3 measurement report reported by the terminal device. The A3 measurement report includes a parameter such as reference signal received power (reference signal received power, RSRP) of the neighboring cell measured by the terminal, and may be used for determining the strength of the interference to the neighboring cell. Certainly, the strength of the interference of the terminal device to the neighboring cell may alternatively be determined in another manner. This is not limited in this embodiment of this application.

For example, FIG. 9 is a diagram of selecting, based on interference identification, a UE to reduce a rank in an SU scheduling scenario according to an embodiment of this application. As shown in the figure, a network device determines, based on states of PDSCHs of a UE0, a UE1, and a UE2, that the UE0 uses Rank1, and the UE1 and the UE2 use Rank4 currently. The network device determines, based on current data amounts of downlink data of the UE1 and the UE2 and downlink transmission parameters (including quantities of spatial multiplexing streams used by the UE1 and the UE2) used by the UE1 and the UE2, quantities of RBs occupied by the downlink data of the UE1 and the UE2, and further determines that a quantity of remaining RBs may support reduction for the rank of one of the UE1 and the UE2, but cannot support simultaneous reduction for the ranks the two UEs. Because interference of the UE1 to a neighboring cell is greater than interference of the UE2 to the neighboring cell, the network device selects the UE1 to reduce the rank, and reduces Rank4 to Rank2 for the UE1.

Although only the first terminal device and the second terminal device are used as an example for description herein, it may be understood that, when N (where N is an integer greater than 1) terminal devices separately satisfy the first condition for reducing ranks, but the ranks of the N terminal devices cannot be simultaneously reduced, if the network device determines that ranks of some of the terminal devices may be simultaneously reduced, the network device may select the some terminal devices to reduce the ranks of the terminal devices, and perform downlink data transmission with the some terminal devices based on downlink transmission parameters obtained after rank reduction. For example, the network device may select a terminal device in the following manner, to perform rank reduction processing on the selected terminal device.

Step 1: The network device determines M combinations (where M is an integer greater than or equal to 1) based on the N terminal devices. Each combination includes at least one of the N terminal devices, and for each combination, a quantity of allocable RBs corresponding to an MU group can support simultaneous reduction for a rank of the terminal device in the combination.

Step 2: The network device determines a sum of strength of interference of the terminal device in each combination to the neighboring cell.

Step 3: The network device selects, from the M combinations based on the sum of the strength of the interference of the terminal device in each combination to the neighboring cell, a combination with a largest sum of strength of interference. The network device performs rank reduction processing on a terminal device in the selected combination. For unselected combinations, the network device does not perform rank reduction processing on terminal devices in the combinations.

In this embodiment of this application, a terminal device with great strength of interference to the neighboring cell is selected, and rank reduction scheduling is preferentially performed on the terminal device. In this case, a quantity of interference sources to a user in the neighboring cell can be reduced, and an interference suppression gain of an IRC technology can be obtained. According to the foregoing method, an interference mitigation scheduling solution may be flexibly selected based on PRB load and interference information, so that an RB resource can be fully utilized, interference can be reduced as much as possible, and system performance can be improved.

Based on the procedure in FIG. 7, in a multi-user scheduling scenario, the following cases may exist.

Case 2-1: Based on a quantity of allocable RBs corresponding to an MU group, if ranks of all terminal devices whose quantities of spatial multiplexing streams are greater than 1 in one MU group can be reduced simultaneously, the network device may reduce the ranks of all the terminal devices whose quantities of spatial multiplexing streams are greater than 1 in the MU group, and may perform downlink data transmission with the terminal devices based on reduced ranks.

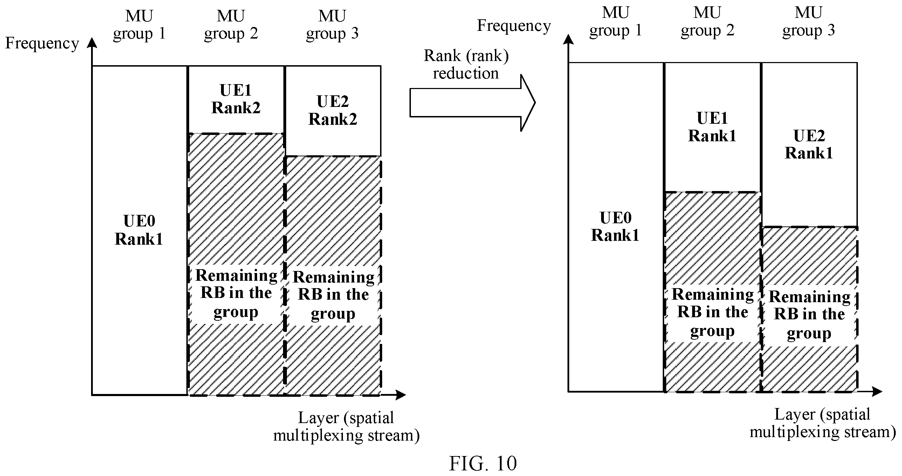

For example, FIG. 10 is a diagram of reducing a rank in an MU scheduling scenario according to an embodiment of this application. As shown in the figure, an MU group 1 includes a UE0, an MU group 2 includes a UE1, and an MU group 3 includes a UE2. Because downlink data of the UE in the MU group 1 occupies a largest quantity of RBs, the quantity of RBs occupied by the downlink data of the UE in the MU group 1 is used as an upper limit of a quantity of allocable RBs corresponding to each MU group. A network device determines, based on the procedure shown in FIG. 7, that the UE1 in the MU group 2 and UE3 in the MU group 2 may satisfy a rank reduction condition. Therefore, rank reduction processing is performed on the UE1 and the UE2, to reduce Rank2 to Rank1 for the UE2, and reduce Rank2 to Rank1 for the UE2.

Case 2-2: Based on a quantity of allocable RBs corresponding to an MU group, if ranks of all terminal devices whose quantities of spatial multiplexing streams are greater than 1 in one MU group cannot be reduced simultaneously, the network device may select one or more of the terminal devices, and a quantity of RBs of a downlink channel in a slot can support simultaneous reduction for a rank of the one or more terminal devices. The network device reduces the rank of the selected one or more terminal devices, and performs downlink data transmission with the selected one or more terminal devices based on a reduced rank.

For example, the first MU group based on multi-user scheduling includes the first terminal device and the second terminal device. The network device may separately determine, based on the procedure shown in FIG. 7, the first quantity of remaining RBs corresponding to the first terminal device in the MU group after the rank of the first terminal device is reduced, and the second quantity of remaining RBs corresponding to the second terminal device in the MU group after the rank of the second terminal device is reduced. If the first quantity of remaining RBs corresponding to the first terminal device supports reduction from the first rank to the second rank for the first terminal device, and the second quantity of remaining RBs corresponding to the second terminal device supports reduction from a third rank (where the third rank is determined based on the state of the downlink channel of the second terminal device) to a fourth rank for the second terminal device, but the first quantity of remaining RBs does not support reduction from the third rank to the fourth rank for the second terminal device when reduction from the first rank to the second rank is performed for the first terminal device (in other words, the second quantity of remaining RBs does not support reduction from the third rank to the fourth rank for the second terminal device when reduction from the first rank to the second rank is performed for the first terminal device), the network device selects one terminal device from the first terminal device and the second terminal device, for example, selects the first terminal device, and for the first terminal device, performs downlink data transmission with the first terminal device based on a second downlink transmission parameter of the terminal device.

Further, for the second terminal device, the network device performs downlink data transmission with the second terminal device by using a downlink transmission parameter determined based on the state of the downlink channel of the second terminal device, and a rank of the downlink transmission parameter is not reduced.

Although only the first terminal device and the second terminal device are used as an example for description herein, it may be understood that, when a plurality of terminal devices separately satisfy the first condition for reducing ranks, but the ranks of the plurality of terminal devices cannot be simultaneously reduced, if the network device determines that ranks of some of the terminal devices may be simultaneously reduced, the network device may select the some terminal devices to reduce the ranks of the terminal devices, and perform downlink data transmission with the some terminal devices based on downlink transmission parameters obtained after rank reduction.

In the foregoing embodiment of this application, in the MU scheduling scenario, when performing downlink transmission scheduling on the terminal device, the network device further considers RB utilization (or PRB utilization) and a downlink traffic volume of the terminal device based on a channel state. On the basis of ensuring downlink data transmission of a terminal device, interference and a quantity of interference sources are reduced by reducing a rank, thereby reducing interference between MU groups and alleviating a problem of frequency selective fading of an MU group with a large traffic volume transmission requirement caused by an MU pairing combination. Further, after a quantity of MU pairing combination layers is reduced, a quantity of interference sources for a UE in a neighboring cell is reduced. In this case, an IRC capability of a receive end of the terminal device can be fully used, and interference suppression performance is improved.

Optionally, the selected first terminal device further satisfies a third condition. The third condition is: A scheduling priority of the first terminal device is higher than a scheduling priority of the second terminal device. It may be understood that if the network device selects a plurality of terminal devices whose ranks can be reduced, scheduling priorities of the plurality of terminal devices are not lower than a scheduling priority of a terminal device that is not selected for rank reduction. In other words, in this case, a terminal device with a high scheduling priority may be preferentially selected for rank reduction scheduling, to reduce interference of the terminal device with a high scheduling priority.

Optionally, the third condition may alternatively be: Strength of interference of the first terminal device to the neighboring cell is greater than strength of interference of the second terminal device to the neighboring cell. It may be understood that if the network device selects a plurality of terminal devices whose ranks can be reduced, strength of interference of the plurality of terminal devices to the neighboring cell is not less than strength of interference of a terminal device that is not selected for rank reduction to the neighboring cell. In other words, in this case, a terminal device with great strength of interference to the neighboring cell may be preferentially selected for rank reduction scheduling, to reduce interference to the neighboring cell.

Case 2-3: Similar to the foregoing case 2-2, when a quantity of remaining RBs in one MU group cannot support simultaneous reduction for ranks of a plurality of terminal devices, the network device may select a terminal device with a large power reduction amount to reduce a rank of the terminal device.

An example in which both the first terminal device and the second terminal device in the MU group satisfy a rank reduction processing condition, but allocable RBs corresponding to the MU group cannot support simultaneous rank reduction processing on the first terminal device and the second terminal device is used. In this case, the network device may determine a corresponding first transmit power reduction amount based on a first MCS (that is, an MCS determined based on the state of the downlink channel of the first terminal device) of the first terminal device; determine a corresponding second transmit power reduction amount based on a first MCS (that is, an MCS determined based on the state of the downlink channel of the second terminal device) of the second terminal device; and select the first terminal device for rank reduction processing if the first transmit power reduction amount is greater than the second transmit power reduction amount. For the second terminal device, the network device performs downlink data transmission by using the downlink transmission parameter determined based on the downlink channel of the second terminal device (in other words, does not perform rank reduction processing on the second terminal device), and does not perform transmit power reduction processing on the second terminal device.

Although only an example in which the MU group includes the first terminal device and the second terminal device is used for description, it may be understood that, if the MU group includes a plurality of (for example, N, where N is an integer greater than 1) terminal devices whose quantities of spatial multiplexing streams are greater than 1, and the N terminal devices separately satisfy the first condition for reducing ranks, but the ranks of the N terminal devices cannot be simultaneously reduced, the network device may select a terminal device in the following manner, to perform rank reduction processing on the selected terminal device.

Step 1: The network device determines M combinations (where M is an integer greater than or equal to 1) based on the N terminal devices included in the MU group. Each combination includes at least one of the N terminal devices, and for each combination, a quantity of allocable RBs corresponding to the MU group can support simultaneous reduction for a rank of the terminal device in the combination.

Step 2: The network device determines a transmit power reduction amount corresponding to each combination. A transmit power reduction amount corresponding to one combination is a sum of transmit power reduction amounts of all terminal devices in the combination. For a method for determining a transmit power reduction amount of a terminal device, refer to the foregoing descriptions.

Step 3: Select a combination with a largest transmit power reduction amount from the M combinations based on the transmit power reduction amount. The network device performs rank reduction processing on a terminal device in the selected combination, and performs transmit power reduction processing. For unselected combinations, the network device does not perform rank reduction processing on terminal devices in the combinations, and does not perform transmit power reduction processing.

Case 2-4: Similar to the scenario in the foregoing case 2-2, if one MU group may satisfy a plurality of rank reduction solutions, for example, may satisfy the following rank reduction solution 1 in which a UE1 in the MU group is reduced from Rank4 to Rank2, and a UE2 in the MU group is reduced from Rank4 to Rank2, and may further satisfy the following rank reduction solution 2 in which the UE1 in the MU group is reduced from Rank4 to Rank1, the network device may select one of the rank reduction solutions to perform rank reduction processing.

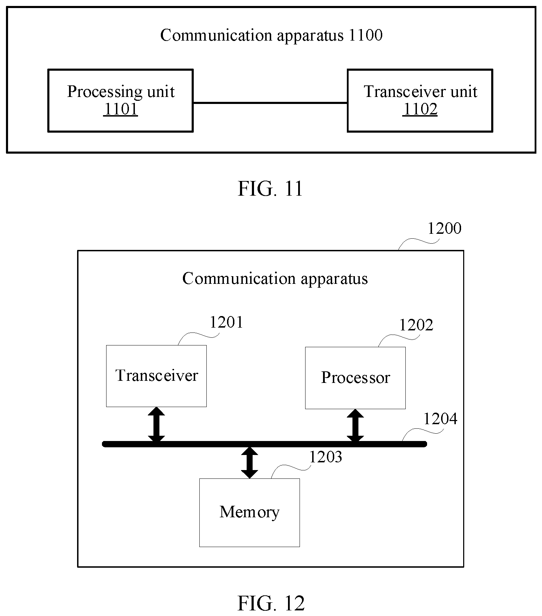

Based on a same technical concept, an embodiment of this application further provides a communication apparatus. The communication apparatus may implement functions implemented by the network device in the foregoing embodiments. The communication apparatus may be a network device (for example, a base station), or may be a communication module applied to the network device (for example, the base station). The communication apparatus may be implemented by using software, hardware, or a combination of software and hardware. As shown in FIG. 11, the communication apparatus 1100 may include a processing unit 1101 and a transceiver unit 1102.

The processing unit 1101 is configured to: determine a first downlink transmission parameter of a first terminal device based on a state of a downlink channel of the first terminal device, where the first downlink transmission parameter includes a first rank; determine, based on the first downlink transmission parameter, a first quantity of RBs occupied by downlink data of the first terminal device; determine a first quantity of remaining RBs based on a quantity of allocable RBs and the first quantity of RB; and perform downlink data transmission with the first terminal device by using the transceiver unit 1102 based on a second downlink transmission parameter if the first terminal device satisfies at least a first condition, where the second downlink transmission parameter includes a second rank, a quantity of spatial multiplexing streams indicated by the second rank is less than a quantity of spatial multiplexing streams indicated by the first rank, and the first condition includes: The first quantity of remaining RBs supports reduction from the first rank to the second rank for the first terminal device.

In a possible implementation, the first terminal device is one of at least two terminal devices based on single-user scheduling, the at least two terminal devices further include a second terminal device, both quantities of spatial multiplexing streams determined based on states of downlink channels of the first terminal device and the second terminal device are greater than 1, the first quantity of remaining RBs of the first terminal device supports reduction from the first rank to the second rank for the first terminal device, and a second quantity of remaining RBs of the second terminal device supports reduction from a third rank to a fourth rank for the second terminal device, but the first quantity of remaining RBs does not support reduction from the third rank to the fourth rank for the second terminal device when reduction from the first rank to the second rank is performed for the first terminal device. The second quantity of remaining RBs is determined based on the quantity of allocable RBs and a quantity of RBs occupied by downlink data of the second terminal device, and the third rank is determined based on the state of the downlink channel of the second terminal device. The processing unit 1101 is specifically configured to: select the first terminal device from the first terminal device and the second terminal device, and perform downlink data transmission with the first terminal device by using the transceiver unit 1102 based on the second downlink transmission parameter.

In a possible implementation, the processing unit 1101 is specifically configured to select the first terminal device from the first terminal device and the second terminal device if the first terminal device further satisfies a second condition. The second condition includes: Strength of interference of the first terminal device to a neighboring cell is greater than strength of interference of the second terminal device to a neighboring cell.

In a possible implementation, the first terminal device is a terminal device in a first multi-user group in at least two multi-user groups based on multi-user scheduling, the at least two multi-user groups further include a second multi-user group, the quantity of allocable RBs is a total quantity of RBs occupied by downlink data of a terminal device in the second multi-user group, and the total quantity of RBs occupied by the downlink data of the terminal device in the second multi-user group is not less than a total quantity of RBs occupied by downlink data of a terminal device in each of the at least two multi-user groups.

In a possible implementation, the first multi-user group further includes a second terminal device, both quantities of spatial multiplexing streams determined based on states of downlink channels of the first terminal device and the second terminal device are greater than 1, the first quantity of remaining RBs of the first terminal device supports reduction from the first rank to the second rank for the first terminal device, and a second quantity of remaining RBs of the second terminal device supports reduction from a third rank to a fourth rank for the second terminal device, but the first quantity of remaining RBs does not support reduction from the third rank to the fourth rank for the second terminal device when reduction from the first rank to the second rank is performed for the first terminal device. The second quantity of remaining RBs of the second terminal device is determined based on the quantity of allocable RBs and a quantity of RBs occupied by downlink data of the second terminal device, and the third rank is determined based on the state of the downlink channel of the second terminal device. The processing unit 1101 is specifically configured to: select the first terminal device from the first terminal device and the second terminal device, and perform downlink data transmission with the first terminal device by using the transceiver unit 1102 based on the second downlink transmission parameter.

In a possible implementation, the processing unit 1101 is specifically configured to: select the first terminal device from the first terminal device and the second terminal device if the first terminal device further satisfies a third condition. The third condition includes: A scheduling priority of the first terminal device is higher than a scheduling priority of the second terminal device, or strength of interference of the first terminal device to a neighboring cell is greater than strength of interference of the second terminal device to a neighboring cell.

In a possible implementation, the processing unit 1101 is specifically configured to: determine a corresponding first transmit power reduction amount based on a first MCS of the first terminal device, and determine a corresponding second transmit power reduction amount based on a first MCS of the second terminal device; and select the first terminal device from the first terminal device and the second terminal device if the first transmit power reduction amount is greater than the second transmit power reduction amount. The processing unit 1101 is further configured to: before downlink data transmission with the first terminal device is performed based on the second downlink transmission parameter, reduce transmit power of the transceiver unit 1102 for the first terminal device based on the first transmit power reduction amount.

In a possible implementation, the processing unit 1101 is further configured to: before downlink data transmission with the first terminal device is performed based on the second downlink transmission parameter, reduce transmit power of the transceiver unit 1102 for the first terminal device.

In a possible implementation, the first downlink transmission parameter further includes a first modulation and coding scheme MCS, the second downlink transmission parameter further includes a second MCS, and the first MCS is equal to the second MCS.

It may be understood that the communication apparatus provided in this embodiment of this application can implement all method steps implemented by the network device in the foregoing method embodiments, and can achieve a same technical effect. A part and beneficial effects that are the same as those in the method embodiments in this embodiment are not specifically described herein again.

For ease of understanding, FIG. 12 shows only a structure necessary for a communication apparatus 1200 to perform the method shown in this application, and no limitation is imposed on that the communication apparatus may have more components in this application. The communication apparatus 1200 may be configured to perform steps performed by a related device in the foregoing method embodiments. For example, the related device may be a terminal device or a network device.

The communication apparatus 1200 may include a transceiver 1201, a memory 1203, and a processor 1202. The transceiver 1201, the memory 1203, and the processor 1202 may be connected to each other via a bus 1204. The transceiver 1201 may be used by the communication apparatus to perform communication, for example, to send or receive a signal. The memory 1203 is coupled to the processor 1202, and may be configured to store a program and data that are necessary for implementing functions by the communication apparatus 1200. The memory 1203 and the processor 1202 may be integrated or may be independent of each other.

For example, the transceiver 1201 may be a communication port, for example, a communication port (or referred to as an interface) used for communication between network elements. The transceiver 1201 may also be referred to as a transceiver unit or a communication unit. The processor 1202 may be implemented by using a processing chip or a processing circuit. The transceiver 1201 may receive or send information in a wireless manner or in a wired manner.

In addition, based on an actual use requirement, the communication apparatus provided in this embodiment of this application may include a processor, and the processor invokes an external transceiver and/or memory to implement the foregoing functions, steps, or operations. The communication apparatus may further include a memory, and the processor invokes and executes a program stored in the memory, to implement the foregoing functions, steps, or operations. Alternatively, the communication apparatus may include a processor and a transceiver (or a communication interface), and the processor invokes and executes a program stored in an external memory, to implement the foregoing functions, steps, or operations. Alternatively, the communication apparatus may include a processor, a memory, and a transceiver.

Based on the same concept as that of the foregoing method embodiments, an embodiment of this application further provides a computer-readable storage medium. The computer-readable storage medium stores program instructions (or referred to as a computer program or instructions). When the program instructions are executed by a processor, a computer is enabled to perform the operation performed by the network device in the foregoing method embodiments and any possible implementation of the foregoing method embodiments.

Based on the same concept as that of the foregoing method embodiments, this application further provides a computer program product, including program instructions. When the computer program product is invoked and executed by a computer, the computer may be enabled to implement the operation performed by the network device in the foregoing method embodiments and any possible implementation of the foregoing method embodiments.

Based on the same concept as that of the foregoing method embodiments, this application further provides a chip or a chip system. The chip is coupled to a transceiver, and is configured to implement the operation performed by the terminal device or the network device in the foregoing method embodiments and any possible implementation of the foregoing method embodiments. The chip system may include the chip and components such as a memory and a communication interface.

Based on the same concept as that of the foregoing method embodiments, an embodiment of this application further provides a communication system. Optionally, the communication system includes a terminal device and a network device, and the network device may perform operations of the network device in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use the form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or one or more blocks in the block diagrams.

It is clear that a person skilled in the art can make various modifications and variations to this application without departing from the protection scope of this application. In this case, provided that the modifications and variations made to this application fall within the scope of the claims of this application and equivalent techniques thereof, this application is also intended to cover such modifications and variations.

**Claims**

1. A communication method, wherein the method comprises:

   determining a first downlink transmission parameter of a first terminal device based on a state of a downlink channel of the first terminal device, wherein the first downlink transmission parameter comprises a first rank;
   determining, based on the first downlink transmission parameter, a first quantity of resource blocks RBs occupied by downlink data of the first terminal device;
   determining a first quantity of remaining RBs based on a quantity of allocable RBs and the first quantity of RBs; and
   performing downlink data transmission with the first terminal device based on a second downlink transmission parameter if the first terminal device satisfies at least a first condition, wherein the second downlink transmission parameter comprises a second rank, a quantity of spatial multiplexing streams indicated by the second rank is less than a quantity of spatial multiplexing streams indicated by the first rank, and the first condition comprises: the first quantity of remaining RBs supports reduction from the first rank to the second rank for the first terminal device.

2. The method according to claim 1, wherein the first terminal device is one of at least two terminal devices based on single-user scheduling, the at least two terminal devices further comprise a second terminal device, both quantities of spatial multiplexing streams determined based on states of downlink channels of the first terminal device and the second terminal device are greater than 1, the first quantity of remaining RBs of the first terminal device supports reduction from the first rank to the second rank for the first terminal device, and a second quantity of remaining RBs of the second terminal device supports reduction from a third rank to a fourth rank for the second terminal device, but the first quantity of remaining RBs does not support reduction from the third rank to the fourth rank for the second terminal device when reduction from the first rank to the second rank is performed for the first terminal device; and the second quantity of remaining RBs is determined based on the quantity of allocable RBs and a quantity of RBs occupied by downlink data of the second terminal device, and the third rank is determined based on the state of the downlink channel of the second terminal device; and
   the performing downlink data transmission with the first terminal device based on a second downlink transmission parameter if the first terminal device satisfies at least a first condition comprises:

   selecting the first terminal device from the first terminal device and the second terminal device; and
   performing downlink data transmission with the first terminal device based on the second downlink transmission parameter.

3. The method according to claim 2, wherein the selecting the first terminal device from the first terminal device and the second terminal device comprises:

   selecting the first terminal device from the first terminal device and the second terminal device if the first terminal device further satisfies a second condition, wherein
   the second condition comprises: strength of interference of the first terminal device to a neighboring cell is greater than strength of interference of the second terminal device to a neighboring cell.

4. The method according to claim 1, wherein the first terminal device is a terminal device in a first multi-user group in at least two multi-user groups based on multi-user scheduling, the at least two multi-user groups further comprise a second multi-user group, the quantity of allocable RBs is a total quantity of RBs occupied by downlink data of a terminal device in the second multi-user group, and the total quantity of RBs occupied by the downlink data of the terminal device in the second multi-user group is not less than a total quantity of RBs occupied by downlink data of a terminal device in each of the at least two multi-user groups.

5. The method according to claim 4, wherein the first multi-user group further comprises a second terminal device, both quantities of spatial multiplexing streams determined based on states of downlink channels of the first terminal device and the second terminal device are greater than 1, the first quantity of remaining RBs of the first terminal device supports reduction from the first rank to the second rank for the first terminal device, and a second quantity of remaining RBs of the second terminal device supports reduction from a third rank to a fourth rank for the second terminal device, but the first quantity of remaining RBs does not support reduction from the third rank to the fourth rank for the second terminal device when reduction from the first rank to the second rank is performed for the first terminal device; and the second quantity of remaining RBs of the second terminal device is determined based on the quantity of allocable RBs and a quantity of RBs occupied by downlink data of the second terminal device, and the third rank is determined based on the state of the downlink channel of the second terminal device; and

the performing downlink data transmission with the first terminal device based on a second downlink transmission parameter if the first terminal device satisfies at least a first condition comprises:

selecting the first terminal device from the first terminal device and the second terminal device; and
performing downlink data transmission with the first terminal device based on the second downlink transmission parameter.

6. The method according to claim 5, wherein the selecting the first terminal device from the first terminal device and the second terminal device comprises:

selecting the first terminal device from the first terminal device and the second terminal device if the first terminal device further satisfies a third condition, wherein
the third condition comprises:

a scheduling priority of the first terminal device is higher than a scheduling priority of the second terminal device; or
strength of interference of the first terminal device to a neighboring cell is greater than strength of interference of the second terminal device to a neighboring cell.

7. The method according to claim 5, wherein the selecting the first terminal device from the first terminal device and the second terminal device comprises:

determining a corresponding first transmit power reduction amount based on a first MCS of the first terminal device, and determining a corresponding second transmit power reduction amount based on a first MCS of the second terminal device; and
selecting the first terminal device from the first terminal device and the second terminal device if the first transmit power reduction amount is greater than the second transmit power reduction amount; and
before the performing downlink data transmission with the first terminal device based on a second downlink transmission parameter, the method further comprises:
reducing transmit power for the first terminal device based on the first transmit power reduction amount.

8. The method according to any one of claims 1 to 6, wherein before the performing downlink data transmission with the first terminal device based on a second downlink transmission parameter, the method further comprises:
reducing transmit power for the first terminal device.

9. The method according to any one of claims 1 to 8, wherein the first downlink transmission parameter further comprises a first modulation and coding scheme MCS, the second downlink transmission parameter further comprises a second MCS, and the first MCS is equal to the second MCS.

10. A communication apparatus, comprising a processing unit and a transceiver unit, wherein the processing unit is configured to:

determine a first downlink transmission parameter of a first terminal device based on a state of a downlink channel of the first terminal device, wherein the first downlink transmission parameter comprises a first rank;
determine, based on the first downlink transmission parameter, a first quantity of resource blocks RBs occupied by downlink data of the first terminal device;
determining a first quantity of remaining RBs based on a quantity of allocable RBs and the first quantity of RBs; and
perform downlink data transmission with the first terminal device by using the transceiver unit based on a second

EP 4 622 156 A1

downlink transmission parameter if the first terminal device satisfies at least a first condition, wherein the second downlink transmission parameter comprises a second rank, a quantity of spatial multiplexing streams indicated by the second rank is less than a quantity of spatial multiplexing streams indicated by the first rank, and the first condition comprises: the first quantity of remaining RBs supports reduction from the first rank to the second rank for the first terminal device.

11. The communication apparatus according to claim 10, wherein the first terminal device is one of at least two terminal devices based on single-user scheduling, the at least two terminal devices further comprise a second terminal device, both quantities of spatial multiplexing streams determined based on states of downlink channels of the first terminal device and the second terminal device are greater than 1, the first quantity of remaining RBs of the first terminal device supports reduction from the first rank to the second rank for the first terminal device, and a second quantity of remaining RBs of the second terminal device supports reduction from a third rank to a fourth rank for the second terminal device, but the first quantity of remaining RBs does not support reduction from the third rank to the fourth rank for the second terminal device when reduction from the first rank to the second rank is performed for the first terminal device; the second quantity of remaining RBs is determined based on the quantity of allocable RBs and a quantity of RBs occupied by downlink data of the second terminal device, and the third rank is determined based on the state of the downlink channel of the second terminal device; and
the processing unit is specifically configured to:

select the first terminal device from the first terminal device and the second terminal device; and
perform downlink data transmission with the first terminal device by using the transceiver unit based on the second downlink transmission parameter.

12. The communication apparatus according to claim 11, wherein the processing unit is specifically configured to:

select the first terminal device from the first terminal device and the second terminal device if the first terminal device further satisfies a second condition, wherein
the second condition comprises: strength of interference of the first terminal device to a neighboring cell is greater than strength of interference of the second terminal device to a neighboring cell.

13. The communication apparatus according to claim 10, wherein the first terminal device is a terminal device in a first multi-user group in at least two multi-user groups based on multi-user scheduling, the at least two multi-user groups further comprise a second multi-user group, the quantity of allocable RBs is a total quantity of RBs occupied by downlink data of a terminal device in the second multi-user group, and the total quantity of RBs occupied by the downlink data of the terminal device in the second multi-user group is not less than a total quantity of RBs occupied by downlink data of a terminal device in each of the at least two multi-user groups.

14. The communication apparatus according to claim 13, wherein the first multi-user group further comprises a second terminal device, both quantities of spatial multiplexing streams determined based on states of downlink channels of the first terminal device and the second terminal device are greater than 1, the first quantity of remaining RBs of the first terminal device supports reduction from the first rank to the second rank for the first terminal device, and a second quantity of remaining RBs of the second terminal device supports reduction from a third rank to a fourth rank for the second terminal device, but the first quantity of remaining RBs does not support reduction from the third rank to the fourth rank for the second terminal device when reduction from the first rank to the second rank is performed for the first terminal device; the second quantity of remaining RBs of the second terminal device is determined based on the quantity of allocable RBs and a quantity of RBs occupied by downlink data of the second terminal device, and the third rank is determined based on the state of the downlink channel of the second terminal device; and
the processing unit is specifically configured to:

select the first terminal device from the first terminal device and the second terminal device; and
perform downlink data transmission with the first terminal device by using the transceiver unit based on the second downlink transmission parameter.

15. The communication apparatus according to claim 14, wherein the processing unit is specifically configured to:

select the first terminal device from the first terminal device and the second terminal device if the first terminal device further satisfies a third condition, wherein
the third condition comprises: a scheduling priority of the first terminal device is higher than a scheduling priority of the second terminal device, or strength of interference of the first terminal device to a neighboring cell is greater than strength of interference of the second terminal device to a neighboring cell.

16. The communication apparatus according to claim 14, wherein the processing unit is specifically configured to:

determine a corresponding first transmit power reduction amount based on a first MCS of the first terminal device, and determine a corresponding second transmit power reduction amount based on a first MCS of the second terminal device; and
select the first terminal device from the first terminal device and the second terminal device if the first transmit power reduction amount is greater than the second transmit power reduction amount; and
the processing unit is further configured to:
before downlink data transmission with the first terminal device is performed based on the second downlink transmission parameter, reduce transmit power of the transceiver unit for the first terminal device based on the first transmit power reduction amount.

17. The communication apparatus according to any one of claims 10 to 15, wherein the processing unit is further configured to:
before downlink data transmission with the first terminal device is performed based on the second downlink transmission parameter, reduce transmit power of the transceiver unit for the first terminal device.

18. The communication apparatus according to any one of claims 10 to 17, wherein the first downlink transmission parameter further comprises a first modulation and coding scheme MCS, the second downlink transmission parameter further comprises a second MCS, and the first MCS is equal to the second MCS.

19. A communication apparatus, comprising one or more processors, wherein when instructions of one or more computer programs are executed by the one or more processors, the communication apparatus is enabled to perform the method according to any one of claims 1 to 9.

20. A computer-readable storage medium, wherein the computer-readable storage medium comprises a computer program, and when the computer program is run on a computing device, the computing device is enabled to perform the method according to any one of claims 1 to 9.

21. A chip, wherein the chip is coupled to a memory, and is configured to read and execute program instructions stored in the memory, to implement the method according to any one of claims 1 to 9.

22. A computer program product, wherein when the computer program product is invoked by a computer, the computer is enabled to perform the method according to any one of claims 1 to 9.

FIG. 1

FIG. 2

FIG. 3

FIG. 4

EP 4 622 156 A1

EP 4 622 156 A1

FIG. 5

FIG. 6

A network device determines a first downlink transmission parameter of a first terminal device based on a state of a downlink channel of the first terminal device, where the first downlink transmission parameter includes a first rank (rank) /S701

The network device determines, based on the first downlink transmission parameter, a first quantity of RBs occupied by downlink data of the first terminal device /S702

The network device determines a first quantity of remaining RBs based on a quantity of allocable RBs and the first quantity of RBs /S703

The first terminal device satisfies at least a first condition (where the first quantity of remaining RBs may support reduction from a first rank (rank) to a second rank (rank) for the first terminal device) /S704

No → The network device performs downlink data transmission with the first terminal device based on the first downlink transmission parameter /S706

Yes

The network device performs downlink data transmission with the first terminal device based on a second downlink transmission parameter, where the second downlink transmission parameter includes the second rank (rank), and a quantity of spatial multiplexing streams indicated by the second rank (rank) is less than a quantity of spatial multiplexing streams indicated by the first rank (rank) /S705

FIG. 7

FIG. 8

FIG. 9

MU group 3 — UE2 Rank1
MU group 2 — UE1 Rank1
MU group 1 — UE0 Rank1
Remaining RB in the group

Frequency

Layer (spatial multiplexing stream)

Rank (rank) reduction

MU group 3 — UE2 Rank2
MU group 2 — UE1 Rank2
MU group 1 — UE0 Rank1
Remaining RB in the group

Frequency

Layer (spatial multiplexing stream)

FIG. 10

Communication apparatus 1100

Processing unit
1101

Transceiver unit
1102

FIG. 11

1200

Communication apparatus

1201

Transceiver

1202

Processor

1204

1203

Memory

FIG. 12

## INTERNATIONAL SEARCH REPORT

| International application No. |
|---|
| **PCT/CN2023/131890** |

| A. | CLASSIFICATION OF SUBJECT MATTER |
|---|---|
| | H04L5/00(2006.01)i |

According to International Patent Classification (IPC) or to both national classification and IPC

| B. | FIELDS SEARCHED |
|---|---|

Minimum documentation searched (classification system followed by classification symbols)

    IPC:H04W,H04L,H04Q

Documentation searched other than minimum documentation to the extent that such documents are included in the fields searched

Electronic data base consulted during the international search (name of data base and, where practicable, search terms used)

    CNKI, VEN, EXTXTC, WPABS, CNTXT, 3GPP: 传输块, 干扰, 减少, 降低, 空间复用流, 秩, 资源块, rank, RB, interference, remaining

| C. | DOCUMENTS CONSIDERED TO BE RELEVANT | |
|---|---|---|
| Category* | Citation of document, with indication, where appropriate, of the relevant passages | Relevant to claim No. |
| A | US 2013033989 A1 (QUALCOMM INC.) 07 February 2013 (2013-02-07) <br> description, paragraphs 8-60 | 1-22 |
| A | CN 114339846 A (CHINA MOBILE COMMUNICATION LTD., RESEARCH INSTITUTE et al.) 12 April 2022 (2022-04-12) <br> entire document | 1-22 |
| A | US 2011182256 A1 (TELEFONAKTIEBOLAGET L M ERICSSON (PUBL)) 28 July 2011 (2011-07-28) <br> entire document | 1-22 |
| A | US 2015092722 A1 (SHARP KABUSHIKI KAISHA) 02 April 2015 (2015-04-02) <br> entire document | 1-22 |
| A | US 2017093474 A1 (LG ELECTRONICS INC.) 30 March 2017 (2017-03-30) <br> entire document | 1-22 |
| A | WO 2022067649 A1 (HUAWEI TECHNOLOGIES CO., LTD.) 07 April 2022 (2022-04-07) <br> entire document | 1-22 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 January 2024** | **20 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**EP 4 622 156 A1**

## INTERNATIONAL SEARCH REPORT

| International application No. |
|---|
| **PCT/CN2023/131890** |

**C.    DOCUMENTS CONSIDERED TO BE RELEVANT**

| Category* | Citation of document, with indication, where appropriate, of the relevant passages | Relevant to claim No. |
|---|---|---|
| A | INTEL CORP. "EPDCCH ICIC in Small Cell Environment"<br>*3GPP TSG-RAN WG1 #74 R1-132935*, 23 August 2013 (2013-08-23),<br>entire document | 1-22 |

Form PCT/ISA/210 (second sheet) (July 2022)

**INTERNATIONAL SEARCH REPORT**
Information on patent family members

International application No.

**PCT/CN2023/131890**

| Patent document cited in search report | | | Publication date (day/month/year) | Patent family member(s) | | | Publication date (day/month/year) |
|---|---|---|---|---|---|---|---|
| US | 2013033989 | A1 | 07 February 2013 | KR | 20140051386 | A | 30 April 2014 |
| | | | | WO | 2013019243 | A1 | 07 February 2013 |
| | | | | EP | 2740305 | A1 | 11 June 2014 |
| | | | | CN | 103858499 | A | 11 June 2014 |
| | | | | JP | 2014522183 | A | 28 August 2014 |
| CN | 114339846 | A | 12 April 2022 | | None | | |
| US | 2011182256 | A1 | 28 July 2011 | EP | 2529587 | A1 | 05 December 2012 |
| | | | | WO | 2011093755 | A1 | 04 August 2011 |
| US | 2015092722 | A1 | 02 April 2015 | JP | 2013511855 | A | 04 April 2013 |
| | | | | KR | 20120060900 | A | 12 June 2012 |
| | | | | US | 2018227098 | A1 | 09 August 2018 |
| | | | | JP | 2015073327 | A | 16 April 2015 |
| | | | | WO | 2011062066 | A1 | 26 May 2011 |
| | | | | US | 2012207119 | A1 | 16 August 2012 |
| | | | | EP | 2502374 | A1 | 26 September 2012 |
| | | | | CN | 102076076 | A | 25 May 2011 |
| US | 2017093474 | A1 | 30 March 2017 | JP | 2017522745 | A | 10 August 2017 |
| | | | | EP | 3151448 | A1 | 05 April 2017 |
| | | | | WO | 2015182902 | A1 | 03 December 2015 |
| | | | | KR | 20170009832 | A | 25 January 2017 |
| WO | 2022067649 | A1 | 07 April 2022 | | None | | |

Form PCT/ISA/210 (patent family annex) (July 2022)

**EP 4 622 156 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211478466